# EUROPEAN PATENT APPLICATION

(11) **EP 3 893 148 A1**
(43) Date of publication of application: **13.10.2021**
(21) Application number: 21164626.0
(22) Date of filing: 24.03.2021
(51) Int. Cl.: G06K 9/00

(54) **METHOD AND DEVICE FOR CONTROLLING VEHICLE, AND VEHICLE**

(30) Priority: 29.06.2020 CN 202010605325
(71) Applicant: BEIJING BAIDU NETCOM SCIENCE AND TECHNOLOGY CO. LTD., 100085 Beijing (CN)
(72) Inventor: ZHANG, Lianchuan, Beijing, 100085 (CN)
(74) Representative: Studio Torta S.p.A.

(57) **Abstract**

The present application discloses a method and a device for controlling a vehicle, and a vehicle and relates to the field of automatic driving and deep learning technology. The specific implementation solution is: acquiring (S101, S201) a current image of a road section in front of the vehicle, and acquiring a parking trajectory path of the vehicle; acquiring (S102, S205)a deep convolutional neural network model corresponding to the parking trajectory path; inputting (S103, S206) the current image to the deep convolutional neural network model to acquire slope information of a road section in front of the vehicle; determining (S104) longitudinal acceleration of the vehicle according to the slope information; and controlling (S105, S220) the vehicle according to the longitudinal acceleration.

## Description

### TECHNICAL FIELD

The present application relates to the field of vehicle control technology, specifically to the field of automatic driving and deep learning technology, and in particular to a method and a device for controlling a vehicle, and the vehicle.

### BACKGROUND

With the development of car assisted driving technology, the development trend of car intelligence is rapid. In order to realize intelligent parking and help the driver to park automatically, an Automatic Parking System has appeared.

The Automatic Parking System (APS) is mainly composed of a sensing unit, a central controller, a steering actuator, and a human-machine interaction module, and can automatically park a vehicle to a designated parking space according to instructions of a user. In the process of controlling the vehicle, slope information of the road section in front of the vehicle is very important for automatic control of the vehicle.

### SUMMARY

The present application provides a method for controlling a vehicle, a device for controlling a vehicle, a vehicle, and a storage medium.

According to a first aspect, a method for controlling a vehicle is provided, including: acquiring a current image of a road section in front of the vehicle, and acquiring a parking trajectory path of the vehicle;
acquiring a deep convolutional neural network model corresponding to the parking trajectory path; inputting the current image to the deep convolutional neural network model to acquire slope information of the road section in front of the vehicle; determining longitudinal acceleration of the vehicle according to the slope information; and
controlling the vehicle according to the longitudinal acceleration.

According to a second aspect, a device for controlling a vehicle is provided, including:
a first acquisition module for acquiring a current image of a road section in front of the vehicle, and acquiring a parking trajectory path of the vehicle;
a second acquisition module for acquiring a deep convolutional neural network model corresponding to the parking trajectory path; a third acquisition module for inputting the current image to the deep convolutional neural network model to acquire slope information of the road section in front of the vehicle;
a first determination module for determining longitudinal acceleration of the vehicle according to the slope information; a controlling module for controlling the vehicle according to the longitudinal acceleration.

According to a third aspect, a vehicle is provided, including:
at least one processor;
and a memory communicatively connected with the at least one processor; wherein instructions executable by the at least one processor are stored in the memory, and the instructions are executed by the at least one processor, to enable the at least one processor to execute a method for controlling a vehicle according to the first aspect of the present application.

According to a fourth aspect, a non-transitory computer-readable storage medium is provided, in which instructions for a computer are stored, for causing the computer to execute a method for controlling a vehicle according to the first aspect of the present application.

It is to be understood that the content described in this section is not intended to identify the key or important features of the embodiments of the present disclosure, nor is it intended to limit the scope of the present disclosure. Other features of the present disclosure will be easily understood through the following description.

### BRIEF DESCRIPTION OF THE DRAWINGS

The drawings will be used to better understand the present solution, and do not constitute a limitation to the present application. In the drawings:
FIG. 1 is a schematic diagram according to a first embodiment of the present application;
FIG. 2 is a schematic diagram according to a second embodiment of the present application;
FIG. 3 is a schematic diagram of a third embodiment according to the present application;
FIG. 4 is a schematic diagram of a fourth embodiment according to the present application;
FIG. 5 is a schematic diagram of a fifth embodiment according to the present application;
FIG. 6 is a schematic diagram of a sixth embodiment according to the present application;
FIG. 7 is a block diagram of a vehicle used to implement the method for controlling the vehicle of an embodiment of the present application.

### DETAILED DESCRIPTION

Exemplary embodiments of the present application will be explained below in connection with the accompanying drawings, which include various details of embodiments of the present application to facilitate understanding, and should be regarded as merely exemplary. Therefore, those of ordinary skill in the art should realize that various changes and modifications can be made to the embodiments described herein without departing from the present application. Likewise, for clarity and conciseness, descriptions of well-known functions and structures will be omitted in the following description.

In order to solve the problem in the automatic parking system of related technologies, a vehicle will usually be equipped additionally with an Inertial measurement unit (IMU) or high-precision map to obtain slope, and the vehicle will be controlled according to the slope. However, the cost of the IMU is relatively high compared to the entire parking system, and the cost of the high-precision map is even higher and the maintenance cost is also high.

A method and a device for controlling a vehicle, a vehicle, and a storage medium according to embodiments of the present application will be described below with reference to the accompanying drawings.

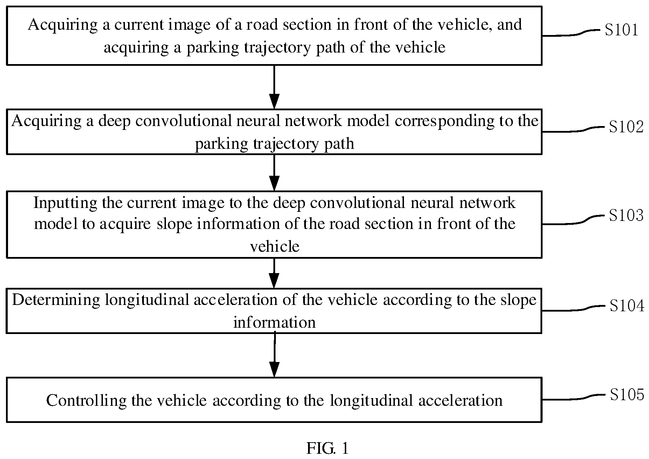

FIG. 1 is a flowchart of a method for controlling a vehicle according to one embodiment of the present application. It should be noted that the method for controlling the vehicle of the embodiment of the present application can be applied to the device for controlling the vehicle of an embodiment of the present application, which can be provided in the vehicle, or can be provided in an electronic device that communicates with and controls the vehicle. The electronic device may include a terminal device or a server.

In S101, a current image of a road section in front of the vehicle is acquired, and a parking trajectory path of the vehicle is acquired.

In the embodiment of the present application, during the usage of the vehicle, when a user needs the vehicle to be parked automatically, the user can trigger an automatic parking function of the vehicle by triggering a control corresponding to the automatic parking function in the vehicle. Correspondingly, after the automatic parking function in the vehicle is triggered, the current image of the road section in front of the vehicle can be acquired through an image acquisition module in the vehicle. For example, the image acquisition module is a camera, and the camera in the vehicle can be installed on the windshield of the vehicle. The current image of things in front of the vehicle can be acquired in real time through the camera on the windshield in the vehicle, so as to acquire the current image of the road section in front of the vehicle.

In other embodiments of the present application, when the user needs the vehicle to automatically drive from a designated parking space to a designated position, the user can send a corresponding control instruction to the vehicle through an intelligent terminal. Correspondingly, the vehicle receives the control instruction, and in response to the control instruction, acquires the current image of the road section in front of the vehicle through the image acquisition module in the vehicle, and performs subsequent control based on the acquired current image.

The current image of the road section in front of the vehicle can be a captured photo image or a captured video image.

It is to be understood that, in this embodiment, in addition to the camera installed on the windshield in the vehicle, cameras provided on other positions of the vehicle can also be used, regardless of the front, the side, or even the rear of the vehicle..

In the embodiment of the present application, a parking trajectory path is obtained by acquiring vehicle data that matches the current vehicle, and then the parking trajectory path is generated based on the vehicle data.

Specifically, the vehicle data that matches the current vehicle can be acquired, and the parking trajectory path can be generated through an internal trajectory planning algorithm thereof, so that parking trajectory of the vehicle can be acquired.

Acquiring the vehicle data that matches the current vehicle refers to collecting the vehicle data acquired by sensors such as cameras and ultrasonic radars on the vehicle.

In one embodiment of the present application, vehicle driving video can also be acquired in real time through the image acquisition module in the vehicle, and parking trajectory video of the vehicle can be acquired from the driving video, so as to determine the parking trajectory path from the parking trajectory video.

In S102, a deep convolutional neural network model corresponding to the parking trajectory path is acquired.

In the present embodiment, the deep convolutional neural network model corresponding to the parking trajectory path can be acquired according to the stored correspondence between the respective parking trajectory path and the deep convolutional neural network model.

In the present embodiment, the deep convolutional neural network model corresponding to the parking trajectory path is obtained by training an initial neural network model based on images corresponding to each sample trajectory point in the parking trajectory path and slope information of each sample trajectory point.

In S103, the current image is input to the deep convolutional neural network model to acquire slope information of the road section in front of the vehicle.

The slope information includes but is not limited to slope type and slope value, and the slope type includes uphill, downhill, etc.

For example, in the process of automatic parking of the vehicle, the current image can be acquired in real time, and the current image can be input into the deep convolutional neural network model corresponding to the parking trajectory path, so that the slope information of the road section in front of the vehicle can be acquired based on the slope information corresponding to the trajectory path through the deep convolutional network model.

In S104, longitudinal acceleration of the vehicle is determined according to the slope information.

Specifically, after acquiring the slope information of the road section in front of the vehicle, initial longitudinal acceleration corresponding to the vehicle can be used. The initial longitudinal acceleration corresponding to the vehicle can be acquired in real time or periodically, and the initial longitudinal acceleration of the vehicle is adjusted based on the slope information, so as to obtain the longitudinal acceleration of the vehicle.

The initial longitudinal acceleration refers to the longitudinal acceleration of the vehicle just before entering the sloped road section, that is, the corresponding acceleration value of the vehicle upon entering the sloped road section.

It may be appreciated that, the initial acceleration of the vehicle can be adjusted based on the slope type and the slope value in the slope information. For an uphill road section, the greater the corresponding slope thereof, the greater the longitudinal acceleration of the vehicle. For a downhill road section, the greater the corresponding slope of the downhill road section, the smaller the longitudinal acceleration of the vehicle.

In S105, the vehicle is controlled according to the longitudinal acceleration.

Specifically, after the longitudinal acceleration of the vehicle is determined based on the slope information of the road section ahead, the vehicle can be driven and controlled based on the determined longitudinal acceleration, so that the vehicle is enabled to pass through the road section in front of the vehicle based on the determined longitudinal acceleration.

In the method for controlling the vehicle according to the embodiment of the present application, in the process of controlling of the vehicle, a current image of the road section in front of the vehicle is acquired in real time, and a parking trajectory path of the vehicle is acquired, and then a deep convolutional neural network model corresponding to the parking trajectory path is acquired, and then the current image is input to the deep convolutional neural network model to acquire slope information of a road section in front of the vehicle, and longitudinal acceleration of the vehicle is determined according to the slope information, and finally the vehicle is controlled according to the longitudinal acceleration. By inputting the current image to the deep convolutional neural network model corresponding to the parking trajectory path to obtained the slope information, so as to determine the longitudinal acceleration according to the slope information, so that the controlling of the vehicle is realized according to the longitudinal acceleration, the problem of acquiring the slope information through an inertial measurement unit or a high-precision map, resulting in high slope acquisition cost and high maintenance cost, will be avoided, thereby reducing the cost of acquiring the slope by the vehicle.

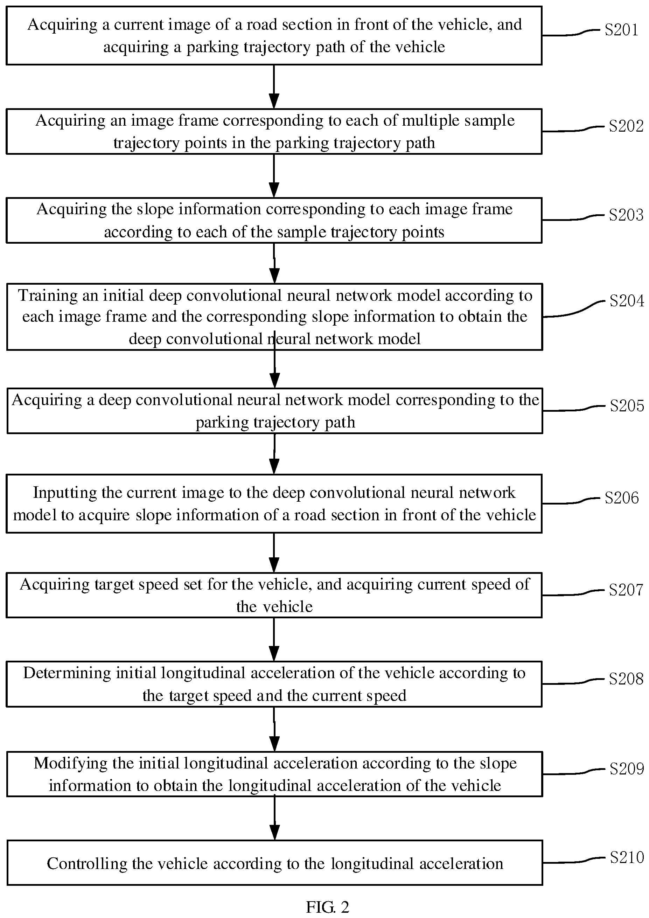

In order to enable those skilled in the art to more readily appreciate the present application, FIG. 2 is a flowchart of a method for controlling a vehicle according to one specific embodiment of the present application. As shown in FIG. 2, the method for controlling the vehicle may include: In S201, a current image of a road section in front of the vehicle is acquired, and a parking trajectory path of the vehicle is acquired.

For example, an image acquisition module in the vehicle can be installed in a camera in the windshield of the vehicle. When an automatic parking request is received, the current image of the road section in front of the vehicle can be acquired in real time through the camera on the windshield in the vehicle, so that the vehicle can acquire the current image of the road section in front of the vehicle.

For example, the automatic parking request can be received by clicking an automatic parking button, or also by inputting a voice command "please park automatically".

In an embodiment of the present application, current position of the vehicle can be acquired, and the parking trajectory path of the vehicle can be determined according to the current position.

The current position of the vehicle can be located through the positioning system in the vehicle to acquire the current position of the vehicle.

Specifically, after acquiring the current position of the vehicle, the parking trajectory path, to which the current position of the vehicle belongs, can be determined, and the parking trajectory path, to which the current position of the vehicle belongs, is taken as current parking trajectory path of the vehicle. The parking trajectory path can be understood as the path from the current position of the vehicle to the position of the parking space.

In an embodiment of the present application, the parking space can be preset.

As a possible implementation method, driving trajectory video of the vehicle can be acquired through the acquisition module in the vehicle, and parking trajectory video can be acquired from the driving trajectory video based on the characteristics of parking trajectory, so that the parking trajectory path in the parking trajectory video can be acquired.

As another possible implementation method, driving trajectory of the vehicle can be acquired and saved in real time through an on-board GPS (Global Positioning System) system, and the saved driving trajectory can be converted to data of kml or gpx format and loaded into a virtual map software, so that the parking trajectory path of the vehicle can be acquired.

The virtual map software consists of arranging satellite photos, aerial photography and GIS (Geographic Information System) arranged on a three-dimensional model of the earth. For example, the virtual map software may be Google Earth.

In S202, an image frame corresponding to each of multiple sample trajectory points in the parking trajectory path is acquired.

The parking trajectory path may include multiple paths, and each path has corresponding road sections such as uphill road sections, downhill road sections, etc., and each road section includes multiple trajectory points.

That is to say, the parking trajectory path of the vehicle is acquired. The parking trajectory path includes multiple trajectory points, and the respective image frames corresponding to the multiple sample trajectory points in parking trajectory path can be acquired. The image frames indicate information on driving scenes of the vehicle.

In S203, the slope information corresponding to each of the image frames is acquired according to each of the sample trajectory points.

In an embodiment of the present application, after acquiring the respective image frames corresponding to the multiple sample trajectory points, camera parameters corresponding to each of the image frames can be acquired, and then three-dimensional modeling can be performed according to each of the image frames and the camera parameters corresponding to each of the image frames to obtain a three-dimensional model, and then spatial position of each of the sample trajectory points in the three-dimensional model can be respectively determined according to the camera parameters corresponding to each of the image frames, and the slope information of each of the sample trajectory points can be determined according to the spatial position of each of the sample trajectory points in the three-dimensional model, and then the slope information of each of the sample trajectory points is taken as the slope information corresponding to the corresponding image frame. For the specific implementation process, please refer to the subsequent embodiments.

In S204, an initial deep convolutional neural network model is trained according to each image frame and corresponding slope information to obtain the deep convolutional neural network model.

For example, the slope information corresponding to the image frames can be used as a label, and the initial deep convolutional neural network model can be trained according to each image frame and slope information label, so as to obtain the trained deep convolutional neural network model.

In the present embodiment, in order to obtain the deep convolutional neural network model corresponding to the parking trajectory path, the slope information of the road section in front of the vehicle can be accurately determined based on the acquired current image, and before the deep convolutional neural network model is used, the initial deep convolutional neural network model is trained in connection with the image frames of multiple sample trajectory points on the parking trajectory path and the slope information corresponding to the image frames, so as to obtain the trained deep convolutional neural network model. Subsequently, the slope information of the road section in front of the vehicle can be accurately determined based on the image.

In S205, the deep convolutional neural network model corresponding to the parking trajectory path is acquired.

In S206, the current image is inputted to the deep convolutional neural network model to acquire the slope information of the road section in front of the vehicle.

Specifically, the current image of the vehicle can be input to the trained deep convolutional neural network model. Multiple road sections may be included in the current image, and each road section may include multiple image frames. The deep convolutional neural network model can output the slope information corresponding to the multiple image frames based on the slope information corresponding to the image frames, so that the slope information of the road section in front of the vehicle can be acquired.

In S207, target speed set for the vehicle is acquired, and current speed of the vehicle is acquired.

The target speed of the vehicle can be set in advance, or the speed that appears more frequently in historical speeds in vehicle driving can also be used as the target speed of the vehicle.

For example, the current speed of the vehicle can be acquired when it is detected that the vehicle enters the parking mode.

When the information that the parking button is pressed is detected, the information is sent to the parking controller through a CAN command, so that the parking controller of the vehicle controls the vehicle to enter the parking mode, and when it is detected that the vehicle enters the parking mode, the current speed of the vehicle is acquired.

The current speed of the vehicle can be directly acquired in real time through the vehicle speed sensor, or the vehicle engine data can also be read through CAN (Controller Area Network) bus to acquire the current speed of the vehicle; the dashboard data can also be read, for example, the image data of the dashboard can be acquired, and then the current speed of the vehicle can be extracted from the image data of the dashboard.

In S208, initial longitudinal acceleration of the vehicle is determined according to the target speed and the current speed.

For example, the longitudinal acceleration *aₓ* of the vehicle can be acquired according to the formula *aₓ* = Δ*v*/Δ*t* =(*vₙ* -*v*_{*n*-1})/Δt. Where Δ*t* is the time required to travel from the current speed to the target speed, *vₙ* is the target speed on the pre-driving path, and *v*_{*n-*1} is the current speed of the pre-driving path.

In S209, the initial longitudinal acceleration is modified according to the slope information to obtain the longitudinal acceleration of the vehicle.

For example, when the slope type is an uphill road section, the required acceleration is large, that is, the initial longitudinal acceleration is modified to obtain the modified longitudinal acceleration; when the slope type is a downhill road section, the required acceleration is small, that is, the initial longitudinal acceleration is modified to obtain the modified longitudinal acceleration.

In S210, the vehicle is controlled according to the longitudinal acceleration.

Specifically, after the longitudinal acceleration of the vehicle is determined based on the slope information of the road section ahead, the vehicle can be driven and controlled based on the determined longitudinal acceleration, so that the vehicle is enabled to pass through the road section in front of the vehicle based on the determined longitudinal acceleration.

In the method for controlling the vehicle according to the embodiment of the present application, in the process of automatic parking of the vehicle, a current image of the road section in front of the vehicle is acquired, and a parking trajectory path of the vehicle is acquired, and thereafter respective image frames corresponding to multiple sample trajectory points in the parking trajectory path are acquired, the slope information corresponding to each of the respective image frames is acquired according to each of the sample trajectory points, and initial deep convolutional neural network model is trained according to each of the image frames and the corresponding slope information to obtain the deep convolutional neural network model, and then the current image is input to the deep convolutional neural network model to acquire the slope information of the road section in front of the vehicle, and thereafter by determining longitudinal acceleration of the vehicle, controlling of the vehicle is realized. In this method, the training of the deep convolutional neural network model is realized based on three-dimensional modeling. By inputting the current image to the trained deep convolutional neural network model to obtain the slope information, and determining the initial longitudinal acceleration of the vehicle according to the target speed and the current speed, and modifying the initial longitudinal acceleration, so that the controlling of the vehicle is realized according to the longitudinal acceleration, the problem of acquiring the slope information through an inertial measurement unit or a high-precision map, resulting in high slope acquisition cost and high maintenance cost, will be avoided, so that the acquired slope information is more accurate and the cost of acquiring the slope by the vehicle is reduced.

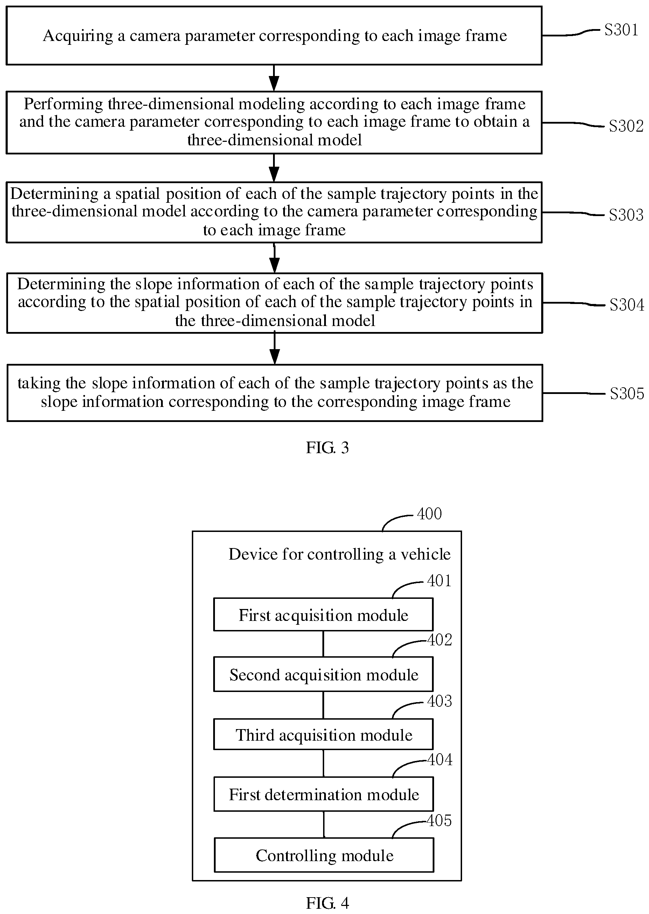

In an embodiment of the present application, as shown in FIG. 3, a specific implementation method for acquiring the slope information corresponding to each of the respective image frames according to each of the sample trajectory points may be as follows:
In S301, a camera parameter corresponding to each image frame is acquired.

Information on the camera parameter includes at least one of the following: external parameters, internal parameters, and distortion parameters.

In an embodiment of the present application, at least one feature point of each image frame can be acquired, and the feature points of the respective image frames can be matched to obtain at least one other image frame matching each image frame to form an image pair. Thereafter, according to information on positions of the feature points in the respective image frames in the image pair, a basic matrix is solved, and the camera parameters corresponding to the respective image frames can be acquired.

Specifically, the feature points are some special points in an image frame, which have some special attributes. The feature points are used to describe key information in an image. Features of an image mainly include line features, corner features, etc., and different features can be described by different feature descriptors. Different feature extraction algorithms can be used to detect feature points in the image frame. For example, SIFT algorithm is used to acquire SIFT (English full name: Scale-invariant feature transform) feature points in an image frame. The SIFT feature points have good robustness and have scale and rotation invariance.

Afterwards, after the feature points of each image frame are extracted, matching can be performed according to the feature points in the respective image frames to find the feature points in one image frame, which correspond to the feature points in the other image frame, and form these image frames into an image pair.

Then, after the above-mentioned feature point matching is performed, for the formed image pair, matrix calculation is performed according to the information on positions of the feature points in the respective image frames in the image pair, for example: calculation for an internal parameter matrix and an external parameter matrix is performed, so that external and internal parameters corresponding to the respective image frames can be obtained.

In S302, three-dimensional modeling is performed according to each image frame and the camera parameter corresponding to each image frame to obtain a three-dimensional model.

It will be appreciated that, in the process of three-dimensional reconstruction of the driving scene according to each image frame, existing three-dimensional reconstruction methods can be used, for example: three-dimensional reconstruction based on SFM (English full name: Struct From Motion) algorithm. Of course, other three-dimensional reconstruction algorithms can also be used, and this will not be specifically limited in the present embodiment. And in the present embodiment, only the process of the three-dimensional reconstruction based on the SFM will be exemplified for description.

The SFM algorithm includes: steps of feature extraction, feature matching, matrix calculation, three-dimensional reconstruction and the like.

For each feature point in each image frame, according to the information on the position of this feature point in the respective image frames in the image pair, and the external and internal parameters of the respective image frames, the position of the three-dimensional point corresponding to this feature point is calculated and obtained, and multiple three-dimensional points constitute the three-dimensional model.

In S303, a spatial position of each of the sample trajectory points in the three-dimensional model is respectively determined according to the camera parameter corresponding to each image frame.

Specifically, the spatial position of each of the sample trajectory points in the three-dimensional model can be determined according to the three-dimensional model and the camera parameters corresponding to each of the image frames.

In another optional implementation, in order to simplify the calculation process, the position of the camera in the three-dimensional model can be projected vertically to the position of the road surface, as the position of the vehicle in the three-dimensional model. Specifically, after according to the three-dimensional model and the camera parameters of each image frame, the position of the camera in the three-dimensional model at the time of shooting of this image frame is acquired, the position of the road surface is found in the three-dimensional model, and the position of the camera in the three-dimensional model is vertically move to the road surface to obtain the position of the vehicle in the three-dimensional model.

In S304, the slope information of each of the sample trajectory points is determined according to the spatial position of each of the sample trajectory points in the three-dimensional model.

In the present embodiment, after the spatial position of each of the sample trajectory points in the three-dimensional model is determined, the slope information of each of the sample trajectory points can be determined according to the spatial position of each of the sample trajectory points in the three-dimensional model.

In S305, the slope information of each of the sample trajectory points is taken as the slope information corresponding to a corresponding image frame.

It can thus be known that, in the present embodiment, through three-dimensional modeling, the acquisition of the slope information corresponding to each of the respective image frames can be realized, so that the acquired slope information is more accurate, and then the accuracy of the deep convolutional neural network model trained based on this slope information can be improved, which facilitates the subsequent accurate determination of the slope information corresponding to the corresponding image based on this deep convolution neural network model.

Corresponding to the method for controlling the vehicle provided in the foregoing several embodiments, an embodiment of the present application also provides a device for controlling a vehicle. Since the device for controlling the vehicle provided in the embodiment of the present application corresponds to the method for controlling the vehicle provided in the foregoing several embodiments, the embodiments of the method for controlling the vehicle are also applicable to the device for controlling the vehicle provided in the present embodiment, which will not be described in detail in the present embodiment. FIGs.4 to 6 are schematic diagrams of the structure of the device for controlling the vehicle according to one embodiment of the present application.

As shown in FIG. 4, this device 400 for controlling the vehicle includes: a first acquisition module 401, a second acquisition module 402, a third acquisition module 403, a first determination module 404 and a controlling module 405.

The first acquisition module 401 is configured for acquiring a current image of a road section in front of the vehicle, and acquiring a parking trajectory path of the vehicle; as an example, the first acquisition module 401 includes: a first acquisition unit for acquiring a current position of the vehicle; and a first determination unit for determining the parking trajectory path of the vehicle according to the current position.

The second acquisition module 402 is configured for acquiring a deep convolutional neural network model corresponding to the parking trajectory path.

The third acquisition module 403 is configured for inputting the current image to the deep convolutional neural network model to acquire slope information of the road section in front of the vehicle.

The first determination module 404 is configured for determining longitudinal acceleration of the vehicle according to the slope information; as an example, the first determination module 404 is configured for modifying the initial longitudinal acceleration according to the slope information to obtain the longitudinal acceleration of the vehicle.

The controlling module 405 is configured for controlling the vehicle according to the longitudinal acceleration.

In the device for controlling the vehicle according to the embodiment of the present application, a current image of the road section in front of the vehicle is acquired in real time, and a parking trajectory path of the vehicle is acquired, and then a deep convolutional neural network model corresponding to the parking trajectory path is acquired, and then the current image is input to the deep convolutional neural network model to acquire slope information of a road section in front of the vehicle, and longitudinal acceleration of the vehicle is determined according to the slope information, and finally the vehicle is controlled according to the longitudinal acceleration. By inputting the current image to the deep convolutional neural network model corresponding to the parking trajectory path to obtained the slope information, so as to determine the longitudinal acceleration according to the slope information, so that the controlling of the vehicle is realized according to the longitudinal acceleration, the problem of acquiring the slope information through an inertial measurement unit or a high-precision map, resulting in high slope acquisition cost and high maintenance cost, will be avoided, and the cost of acquiring the slope by the vehicle is reduced.

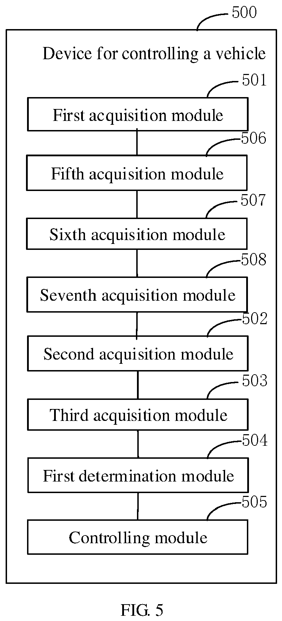

According to one embodiment of the present application, 501 to 505 in FIG. 5 have the same function and structure as 401 to 405 in FIG. 4. As shown in FIG. 5, the device further includes: a fifth acquisition module 506 for acquiring respective image frames corresponding to multiple sample trajectory points in the parking trajectory path; a sixth acquisition module 507 for acquiring the slope information corresponding to each of the respective image frames according to each of the sample trajectory points; a seventh acquisition module 508 for training an initial deep convolutional neural network model according to each of the image frames and the corresponding slope information to obtain the deep convolutional neural network model.

In an embodiment of the present application, the sixth acquisition module 507 includes: a second acquisition unit for acquiring a camera parameter corresponding to each of the image frames; a third acquisition unit for performing three-dimensional modeling according to each of the image frames and the camera parameters corresponding to each of the image frames to obtain a three-dimensional model; a second determination unit for respectively determining spatial position of each of the sample trajectory points in the three-dimensional model according to the camera parameter corresponding to each of the image frames; a third determination unit for determining the slope information of each of the sample trajectory points according to the spatial position of each of the sample trajectory points in the three-dimensional model; a fourth determination unit for using the slope information of each of the sample trajectory points as the slope information corresponding to a corresponding image frame.

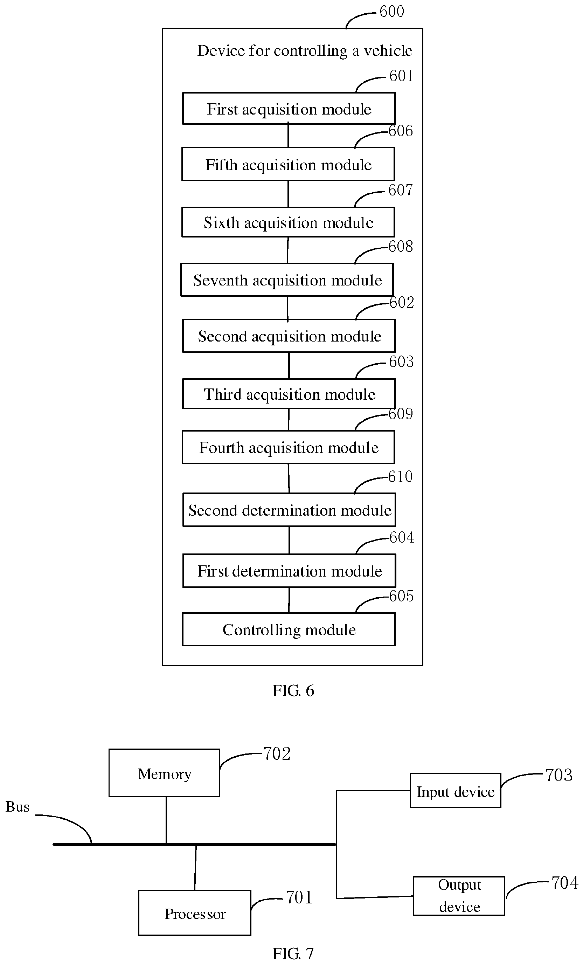

According to one embodiment of the present application, 601 to 608 in FIG. 6 have the same function and structure as 501 to 508 in FIG. 5. As shown in FIG. 6, before the first determination module 604, the device further includes: a fourth acquisition module 609 for acquiring target speed set for the vehicle, and acquiring current speed of the vehicle; a second determination module 610 for determining initial longitudinal acceleration of the vehicle according to the target speed and the current speed.

According to an embodiment of the present application, the present application also provides a vehicle and a readable storage medium.

As shown in FIG. 7, it is a block diagram of an electronic device for implementing the method for controlling a vehicle according to an embodiment of the present application. The electronic device are intended to represent various forms of digital computers, such as laptop computers, desktop computers, workbenches, personal digital assistants, servers, blade servers, mainframe computers, and other suitable computers. Electronic device may also represent various forms of mobile devices, such as personal digital assistants, cellular phones, intelligent phones, wearable devices, and other similar computing devices. The components shown herein, their connections and relations, and their functions are merely examples, and are not intended to limit the implementation of the present application described and/or required herein.

As shown in FIG. 7, the vehicle includes: one or more processors 701, a memory 702, and interfaces for connecting various components which include a high-speed interface and a low-speed interface. The various components are interconnected using different buses and can be mounted on a common motherboard or otherwise installed as required. The processor may process instructions executed within the electronic device, which include instructions stored in or on a memory to display graphic information of a graphical user interface (GUI) on an external input/output device (such as a display device coupled to the interface). In other embodiments, multiple processors and/or multiple buses can be used with multiple memories, if desired. Similarly, multiple electronic devices can be connected, each providing some of the necessary operations (for example, as a server array, a group of blade servers, or a multiprocessor system). One processor 701 is exemplified in FIG. 7.

The memory 702 is a non-transitory computer-readable storage medium provided by the present application. The memory stores instructions executable by at least one processor, so as to enable the at least one processor to execute the method for controlling the vehicle provided by the present application. The non-transitory computer-readable storage medium of the present application stores computer instructions, which are used to cause a computer to execute the method for controlling the vehicle provided by the present application.

As a non-transitory computer-readable storage medium, the memory 702 can be used to store non-transitory software programs, non-transitory computer executable programs, and modules, such as program instructions/modules/units corresponding to the method for controlling the vehicle in the embodiments of the present application (for example, the first acquisition module 401, the second acquisition module 402, the third acquisition module 403, the first determination module 404 and the controlling module 405 as shown in FIG. 4). The processor 701 executes various functional applications and data processing of the server by running non-transitory software programs, instructions, and modules stored in the memory 702, that is, implements the method for controlling the vehicle in the above described method embodiments.

The memory 702 may include a storage program area and a storage data area. The storage program area can store an operating system and an application program required for at least one function; and the storage data area can store data created according to the use of the method for controlling the vehicle, etc. In addition, the memory 702 may include a high-speed random access memory, and may also include a non-transitory memory, such as at least one magnetic disk storage device, a flash memory device, or other non-transitory solid-state storage device. In some embodiments, the memory 702 may optionally include memories remotely provided relative to the processor 701, and these remote memories may be connected to the vehicle for controlling the vehicle via a network. Examples of the above network include, but are not limited to, the Internet, an intranet, a local area network, a mobile communication network, and combinations thereof.

The vehicle for implementing the method for controlling the vehicle may further include an input device 703 and an output device 704. The processor 701, the memory 702, the input device 703, and the output device 704 may be connected through a bus or in other manners. In FIG. 7, the connection through the bus is exemplified.

The input device 703 can receive inputted numeric or character information, and generate key signal inputs related to user settings and function control of vehicle control, such as a touch screen, a keypad, a mouse, a track pad, a touchpad, a pointing stick, one or more mouse buttons, a trackball, a joystick and other input devices. The output device 704 may include a display device, an auxiliary lighting device (for example, an LED), a haptic feedback device (for example, a vibration motor), and the like. The display device may include, but is not limited to, a liquid crystal display (LCD), a light emitting diode (LED) display, and a plasma display. In some embodiments, the display device may be a touch screen.

Various embodiments of systems and technologies described herein can be implemented in digital electronic circuit systems, integrated circuit systems, application specific integrated circuits (ASICs), computer hardwares, firmwares, softwares, and/or combinations thereof. These various embodiments may include: implementation in one or more computer programs executable on and/or interpretable on a programmable system including at least one programmable processor, which may be a dedicated or general-purpose programmable processor that may receive data and instructions from a storage system, at least one input device, and at least one output device, and transmit data and instructions to the storage system, the at least one input device, and the at least one output device.

These computing programs (also referred to as programs, software, software applications, or codes) include machine instructions of a programmable processor and can be implemented using high-level procedures and/or object-oriented programming languages, and/or assembly/machine languages. As used herein, the terms "machine-readable medium" and "computer-readable medium" refer to any computer program product, device, and/or apparatus used to provide machine instructions and/or data to a programmable processor (for example, magnetic disks, optical disks, memories, and programmable logic devices (PLDs)), including machine-readable medium that receives machine instructions as machine-readable signals. The term "machine-readable signal" refers to any signal used to provide machine instructions and/or data to a programmable processor.

In order to provide interaction with the user, the systems and techniques described herein may be implemented on a computer having a display device (for example, a Cathode Ray Tube (CRT) or Liquid Crystal Display (LCD) monitor) for displaying information to the user; and a keyboard and pointing device (such as a mouse or trackball) through which the user can provide input into a computer. Other kinds of apparatuses may also be used to provide interaction with the user. For example, the feedback provided to the user may be any form of sensory feedback (for example, visual feedback, auditory feedback, or haptic feedback); and input from the user may be received in any form (including acoustic input, voice input, or tactile input).

The systems and technologies described herein can be implemented in a computing system including background components (for example, as a data server), a computing system including middleware components (for example, an application server), or a computing system including front-end components (for example, a user computer with a graphical user interface or a web browser, through which the user can interact with the implementation of the systems and technologies described herein), or a computer system including any combination of such background components, middleware components, and front-end components. The components of the system may be interconnected by any form or medium of digital data communication (such as, a communication network). Examples of communication networks include: a local area network (LAN), a wide area network (WAN), and the Internet.

The computer system may include clients and servers. The client and server are generally remote from each other and typically interact through a communication network. The client-server relation is generated by computer programs running on the respective computers and having a client-server relation with each other.

According to the technical solutions of the embodiments of the present application, a current image of the road section in front of the vehicle is acquired in real time, and a parking trajectory path of the vehicle is acquired, and then a deep convolutional neural network model corresponding to the parking trajectory path is acquired, and then the current image is input to the deep convolutional neural network model to acquire slope information of a road section in front of the vehicle, and longitudinal acceleration of the vehicle is determined according to the slope information, and finally the vehicle is controlled according to the longitudinal acceleration. By inputting the current image to the deep convolutional neural network model corresponding to the parking trajectory path to obtained the slope information, so as to determine the longitudinal acceleration according to the slope information, so that the controlling of the vehicle is realized according to the longitudinal acceleration, the problem of acquiring the slope information through an inertial measurement unit or a high-precision map, resulting in high slope acquisition cost and high maintenance cost, will be avoided, and the cost of acquiring the slope by the vehicle will be reduced.

It should be understood that the various forms of flows shown above can be used to reorder, add, or delete steps. For example, the steps disclosed in the present application can be executed in parallel, sequentially, or in different orders. As long as the desired results of the technical solutions disclosed in the present application can be achieved, there is no limitation herein.

The foregoing specific embodiments do not constitute a limitation on the protection scope of the present application. It should be understood by those skilled in the art that various modifications, combinations, sub-combinations, and substitutions may be made according to design requirements and other factors.

## Claims

1. A method for controlling a vehicle, comprising:
acquiring (S101, S201) a current image of a road section in front of the vehicle, and acquiring a parking trajectory path of the vehicle;
acquiring (S102, S205) a deep convolutional neural network model corresponding to the parking trajectory path;
inputting (S103, S206) the current image to the deep convolutional neural network model to acquire slope information of the road section in front of the vehicle;
determining (S104) longitudinal acceleration of the vehicle according to the slope information; and
controlling (S105, S210) the vehicle according to the longitudinal acceleration.

2. The method according to claim 1, wherein acquiring (S101, S201) the parking trajectory path of the vehicle comprises:
acquiring a current position of the vehicle; and
determining the parking trajectory path of the vehicle based on the current position.

3. The method according to claim 1 or 2, before determining (S104) the longitudinal acceleration of the vehicle according to the slope information, further comprising:
acquiring (S207) target speed set for the vehicle, and acquiring current speed of the vehicle;
determining (S208 initial longitudinal acceleration of the vehicle according to the target speed and the current speed;
wherein determining (S104) the longitudinal acceleration of the vehicle according to the slope information comprises:
modifying (S209) the initial longitudinal acceleration according to the slope information to obtain the longitudinal acceleration of the vehicle.

4. The method according to any of 1 to 3, before acquiring (S102, S205) the deep convolutional neural network model corresponding to the parking trajectory path, further comprising:
acquiring (S202) an image frame corresponding to each of a plurality of sample trajectory points in the parking trajectory path;
acquiring (S203) slope information corresponding to each image frame based on each sample trajectory point;
training (S204) an initial deep convolutional neural network model based on each image frame and corresponding slope information to obtain the deep convolutional neural network model.

5. The method according to claim 4, wherein (S203) acquiring the slope information corresponding to each image frame based on each sample trajectory point comprises:
acquiring (S301) a camera parameter corresponding to each image frame;
performing (S302) three-dimensional modeling based on each image frame and the camera parameter corresponding to each image frame to obtain a three-dimensional model;
determining (S303) a spatial position of each sample trajectory point in the three-dimensional model based on the camera parameter corresponding to each image frame;
determining (S304) the slope information of each sample trajectory point according to the spatial position of each sample trajectory point in the three-dimensional model;
using (S305) the slope information of each sample trajectory point as slope information corresponding to a corresponding image frame.

6. A device (400, 500, 600) for controlling a vehicle, comprising:
a first acquisition module (401, 501, 601), configured to acquire a current image of a road section in front of the vehicle, and acquire a parking trajectory path of the vehicle;
a second acquisition module (402, 502, 602), configured to acquire a deep convolutional neural network model corresponding to the parking trajectory path;
a third acquisition module (403, 503, 603), configured to input the current image to the deep convolutional neural network model to acquire slope information of the road section in front of the vehicle;
a first determination module (404, 504, 604), configured to determine longitudinal acceleration of the vehicle according to the slope information; and
a controlling module (405, 504, 604), configured to control the vehicle according to the longitudinal acceleration.

7. The device (400, 500, 600) according to claim 6, wherein the first acquisition module (401, 501, 601) comprises:
a first acquisition unit, configured to acquire a current position of the vehicle; and
a first determination unit, configured to determine the parking trajectory path of the vehicle based on the current position.

8. The device (400, 500, 600) according to claim 6 or 7, further comprising:
a fourth acquisition module (609), configured to acquire target speed set for the vehicle, and acquire current speed of the vehicle;
a second determination module (610), configured to determine initial longitudinal acceleration of the vehicle according to the target speed and the current speed;
wherein the first determination module (404, 504, 604) is configured to modify the initial longitudinal acceleration according to the slope information to obtain the longitudinal acceleration of the vehicle.

9. The device (400, 500, 600) according to any of 6 to 8, the method further comprising:
a fifth acquisition module (506, 606), configured to acquire an image frame corresponding to each of a plurality of sample trajectory points in the parking trajectory path;
a sixth acquisition module (507, 607), configured to acquire slope information corresponding to each image frame based on each sample trajectory point;
a seventh acquisition module (508, 608), configured to train an initial deep convolutional neural network model based on each image frame and corresponding slope information to obtain the deep convolutional neural network model.

10. The device (400, 500, 600) according to claim 9, wherein the sixth acquisition module (507, 607) comprises:
a second acquisition unit, configured to acquire a camera parameter corresponding to each image frame;
a third acquisition unit, configured to perform three-dimensional modeling based on each image frame and the camera parameter corresponding to each image frame to obtain a three-dimensional model;
a second determination unit, configured to determine a spatial position of each sample trajectory point in the three-dimensional model based on the camera parameter corresponding to each image frame;
a third determination unit, configured to determine the slope information of each sample trajectory point according to the spatial position of each sample trajectory point in the three-dimensional model;
a fourth determination unit, configured to use the slope information of each sample trajectory point as slope information corresponding to a corresponding image frame.

11. A vehicle, comprising:
at least one processor; and
a memory communicatively connected with the at least one processor; wherein
instructions executable by the at least one processor are stored in the memory, and
the instructions are executed by the at least one processor, to enable the at least one processor to execute the method for controlling a vehicle according to any one of claims 1-5.

12. A non-transitory computer-readable storage medium having computer instructions stored thereon, wherein the computer instructions are configured to enable a computer to execute the method for controlling a vehicle according to any one of claims 1-5.

13. A computer program product, having computer instructions stored thereon, wherein when the computer instructions are executed by a processor, the processor is caused to implement the method for controlling a vehicle according to any one of claims 1-5.

14. A computer program, having computer instructions stored therein, wherein the computer instructions are configured to enable a computer to execute the method for controlling a vehicle according to any one of claims 1-5.
